# EUROPÄISCHE PATENTSCHRIFT

(11) **EP 3 181 406 B1**
(45) Veröffentlichungstag und Bekanntmachung des Hinweises auf die Patenterteilung: **31.10.2018**
(21) Anmeldenummer: 16201904.6
(22) Anmeldetag: 02.12.2016
(51) Int. Cl.: B60R 13/00

(54) **VERKLEIDUNGSTEIL FÜR EIN KRAFTFAHRZEUG, SOWIE VERFAHREN ZUR HERSTELLUNG EINES VERKLEIDUNGSTEILES**
CLADDING SECTION FOR A MOTOR VEHICLE AND METHOD FOR PRODUCING A CLADDING SECTION
ÉLÉMENT D'HABILLAGE POUR VÉHICULE AUTOMOBILE ET PROCÉDÉ DESTINE À LA FABRICATION D'UN ÉLÉMENT D'HABILLAGE

(30) Priorität: 17.12.2015 DE 102015122103
(43) Veröffentlichungstag der Anmeldung: 21.06.2017
(73) Patentinhaber: REHAU AG + Co, 95111 Rehau (DE)
(72) Erfinder: Vogel, Matthias, 95233 Helmbrechts (DE); Uebel, Julia, 08527 Plauen (DE); Wolff, Christian, 95030 Hof (DE)

(56) Entgegenhaltungen:
- DE-B3- 10 218 004
- US-A- 4 838 004
- US-A- 5 783 020
- US-B1- 8 480 148

## Beschreibung

Die vorliegende Erfindung betrifft ein Verkleidungsteil für ein Kraftfahrzeug, sowie ein Verfahren zur Herstellung eines Verkleidungsteiles.

Aus dem Stand der Technik sind eine Vielzahl von Verkleidungsteilen für ein Kraftfahrzeug bekannt, umfassend ein langgestrecktes, schalenförmiges Dekorelement aus einem ersten thermoplastischen Kunststoffmaterial, das zumindest einen Verbindungsabschnitt mit einer U-förmigen oder V-förmigen oder L-förmigen Querschnittsgeometrie aufweist und, ein das Dekorelement zumindest im Bereich des Verbindungsabschnittes verstärkendes Trägerelement aus einem zweiten thermoplastischen Kunststoffmaterial, wobei das Trägerelement innerhalb des Verbindungsabschnittes des schalenartigen Dekorelements angeordnet und von diesem umgriffen ist, wobei das Dekorelement randseitig mindestens einen Flanschabschnitt und einen an den Flanschabschnitt angrenzenden Mittelabschnitt aufweist, und wobei ein Abschnitts des Trägerelementes in einem gemeinsamen Anlagebereich an der Innenseite des Flanschabschnittes des Dekorelementes anliegt.

Das Trägerelement und das Dekorelement werden hierbei in der Regel über Rastverbindungen miteinander verbunden. Nachteilig ist hierbei jedoch, dass der an dem Dekorelement befindliche Teil der Rastverbindung zu einer Anhäufung von Kunststoffmaterial führt die während der Herstellung des Dekorelementes zu sog. Einfallstellen auf der Sichtseite des Dekorelementes führen. Um diese zu kaschieren werden diese Bereiche in Geometriesprünge der Sichtseite des Dekorelementes gelegt oder auf der Sichtseite wird eine grobe Strukturierung (z.B. Narbung) vorgesehen. Insbesondere für nachträglich lackierte Bauteile eignet sich dieses Vorgehen nicht, bzw. wird das Design des Dekorelementes stark eingeschränkt, da die Position und die örtliche Ausdehnung der Rastverbindung nur eingeschränkt variiert werden können.

Alternativ besteht die Möglichkeit die Verbindungsabschnitte von Dekorelement und Trägerelement vollflächig zu verkleben, wobei sich hierdurch jedoch das Bauteilgewicht entsprechend um die Masse des eingesetzten Klebstoffes erhöht. Zudem müssen für die üblicherweise für das Kunststoffmaterial der Verkleidungsteile eingesetzten Polyolefine (Polypropylen und Polyethylen) aufwendige Vorbehandlungsmaßnahmen (z.B. eine Beflammung) getroffen werde, damit eine ausreichende Haftfestigkeit erzielt wird.

Ein gattungsgemäßes Verkleidungsteil kann der US 4,838,004 A entnommen werden.

Die Erfindung stellt sich daher die Aufgabe ein Verkleidungsteil mit den eingangs beschriebenen Merkmalen, sowie ein Verfahren zur Herstellung eines solchen Verkleidungsteiles anzugeben, das gegenüber dem Stand der Technik einen größeren Gestaltungsspielraum des Designs und gleichzeitig eine Gewichtsreduktion ermöglicht.

Erfindungsgemäß wird diese Aufgabe gelöst durch ein Verkleidungsteil für ein Kraftfahrzeug umfassend:
- ein langgestrecktes, schalenförmiges Dekorelement aus einem ersten thermoplastischen Kunststoffmaterial, das zumindest einen Verbindungsabschnitt mit einer U-förmigen oder V-förmigen oder L-förmige Querschnittsgeometrie aufweist und
- ein das Dekorelement zumindest im Bereich des Verbindungsabschnittes verstärkendes Trägerelement aus einem zweiten thermoplastischen Kunststoffmaterial,
wobei das Trägerelement innerhalb des Verbindungsabschnittes des schalenartigen Dekorelements angeordnet und von diesem umgriffen ist, wobei das Dekorelement randseitig mindestens einen Flanschabschnitt und einen an den Flanschabschnitt angrenzenden Mittelabschnitt aufweist, und wobei ein Abschnitts des Trägerelementes in einem gemeinsamen Anlagebereich an der Innenseite des Flanschabschnittes des Dekorelementes anliegt, wobei erfindungsgemäß ein Teilstück des Flanschabschnitts des Dekorelementes zumindest abschnittsweise über den Abschnitt des Trägerelementes hinausragt und, dass das Teilstück oder ein Segment des Teilstücks so umgeformt ist, dass das Dekorelement mittels des Teilstücks oder des Segments des Teilstücks formschlüssig mit dem Abschnitt des Trägerelementes verbunden ist. Indem erfindungsgemäß die Verbindungszone in ein umgeformtes Teilstück des randseitigen Flanschabschnitts des Dekorelementes gelegt wird, weist das Verkleidungsteil eine unbeeinträchtigte Sichtseite des Dekorelementes auf und kann zudem ohne die Nachteile einer Klebeverbindung gefügt werden.

Der Abschnitt des Trägerelementes kann ebenfalls ein Flanschabschnitt sein.

Bevorzugt ist zumindest der Flanschabschnitt des Dekorelementes in einem Winkel von der Sichtseite des Dekorelementes weg orientiert. Unter der Sichtseite wird diejenige Seite verstanden die im Verbauzustand am Kraftfahrzeug sichtbar ist.

Das Segment ist durch einen dem Trägerelement zugewandten innenliegenden Bereich der Wandung des Teilstücks gebildet, so dass ein außenliegender Bereich der Wandung des Teilstückes unverformt bleibt. Die Wandung wird hierbei in zwei Bereiche geteilt, wobei nur der innenliegende Bereich so umgeformt ist, dass das Dekorelement über das Teilstück formschlüssig mit dem Abschnitt des Trägerelementes verbunden ist. Der zu der Sichtseite des Dekorelementes gehörende außenliegende Bereich bleibt unverformt. Die Verbindungszone ist dann von außen nicht erkennbar. Die Teilung der beiden Bereiche erfolgt bei dem Verfahren zur Herstellung des Verkleidungsteiles bevorzugt durch eine Schneidkante.

Das Dekorelement und das Trägerelement können jeweils einstückig ausgebildet sein. Das Dekorelement und/oder das Trägerelement können insbesondere mit einem Kunststoff-Spritzgussverfahren hergestellt sein.

Das erste thermoplastische Kunststoffmaterial ist erfindungsgemäß ungleichartig zu dem zweiten thermoplastischen Kunststoffmaterial. Aufgrund des Formschlusses muss nicht, wie bei einer Schweißverbindung, auf eine Verträglichkeit des ersten mit dem zweiten Kunststoffmaterial geachtet werden. Das Trägerelement kann Verbindungsmittel zum Verbinden mit der Karosserie oder mit weiteren Anbauteilen eines Kraftfahrzeuges aufweisen.

Das Verkleidungsteil kann eine Radlaufblende oder eine Türschutzleiste oder eine Steinschlagschutzleiste oder eine Schwellerverkleidung oder ein Luftleitelement, insbesondere ein Spoiler (Dachkantenspoiler, Heckspoiler, Seitenspoiler, Frontspoiler), sein.

Das Trägerelement kann auf der dem Abschnitt gegenüberliegenden Randseite über einen weiteren Formschluss mit dem Dekorelement verbunden sein. Die den weiteren Formschluss bildenden Elemente können bereits bei der Bereitstellung oder bei der Herstellung von Trägerelement und Dekorelement vorgesehen, und beim Anordnen des Trägerelementes innerhalb des Verbindungsabschnittes des Dekorelementes der weitere Formschluss hergestellt werden.

Ein Verfahren zur Herstellung eines Verkleidungsteiles für ein Kraftfahrzeug, insbesondere eines vorstehend beschriebenen Verkleidungsteils, insbesondere eines Verkleidungsteils nach einem der Ansprüche 1 bis 6, umfasst die folgenden Schritte:
- Bereitstellen eines langgestreckten, schalenförmigen Dekorelements aus einem ersten thermoplastischen Kunststoffmaterial, das zumindest einen Verbindungsabschnitt mit einer U-förmigen oder V-förmigen oder L-förmige Querschnittsgeometrie aufweist und
- Bereitstellen eines das Dekorelement zumindest im Bereich des Verbindungsabschnittes verstärkenden Trägerelements aus einem zweiten thermoplastischen Kunststoffmaterial, und
- Anordnen des Trägerelements innerhalb des Verbindungsabschnittes des schalenartigen Dekorelements, so dass das Trägerelement von diesem um-griffen wird, wobei das Dekorelement randseitig mindestens einen Flanschabschnitt und einen an den Flanschabschnitt angrenzenden Mittelabschnitt aufweist, und
- Anlegen eines Abschnitts des Trägerelementes in einem gemeinsamen Anlagebereich an die Innenseite des Flanschabschnittes des Dekorelementes,
wobei ein Teilstück des Flanschabschnitts des Dekorelementes zumindest abschnittsweise über den Abschnitt des Trägerelementes hinausragt und,
wobei das Teilstück oder ein Segment des Teilstücks so umgeformt wird, dass das Dekorelement mittels des Teilstücks oder des Segments des Teilstücks formschlüssig mit dem Abschnitt des Trägerelementes verbunden wird.

Das Bereitstellen des Dekorelementes und/oder das Bereitstellen des Tägerelementes kann den Schritt des Kunststoff-Spritzgießens des Dekorelementes und/oder des Trägerelementes umfassen.

Das Teilstück oder das Segment des Teilstücks kann mittels einer mit Ultraschall angeregten Sonotrode umgeformt werden.

Der Kontaktbereich der Sonotrode zu dem Teilstück oder dem Segment des Teilstücks kann rechteckig, oval oder kreisrund sein oder eine Mischform der vorgenannten Formen aufweisen. Der Kontaktbereich kann in einem Querschnitt eine U-förmige oder V-förmige oder rechteckige oder dreieckige Geometrie aufweisen. Die Sonotrode kann im Kontaktbereich wenigstens eine Schneidkante aufweisen.

Generell schließt das vorstehend beschriebene Verfahren und das vorstehend beschriebene Verkleidungsteil ein, dass neben dem durch die Umformung hergestellten Formschluss zusätzlich ein Kraft- und/oder Stoffschluss ausgebildet ist oder wird.

### Ausführungsbeispiele

Im Folgenden wird die Erfindung anhand lediglich Ausführungsbeispiele darstellender Zeichnungen erläutert. Gleiche oder funktionsgleiche Elemente sind mit den gleichen Bezugszeichen versehen.

Es zeigen schematisch:
- Fig. 1:: eine Darstellung eines Kraftfahrzeuges mit erfindungsgemäßen Verkleidungsteilen;
- Fig. 2 bis 4:: Ablauf eines Verfahrens zur Herstellung eines Verkleidungsteiles sowie ein Verkleidungsteil;
- Fig. 5 bis 7:: Varianten eines Verfahrens zur Herstellung eines Verkleidungsteils sowie eine Varianten eines Verkleidungsteils;
- Fig. 8 bis 10:: eine weitere Variante eines Verfahrens zur Herstellung eines Verkleidungsteils sowie eine weitere Variante eines Verkleidungsteils;
- Fig. 11a - 11g:: Sonotrodengeometrien, sowie Ausgestaltungen des Kontaktbereichs der Sonotrode

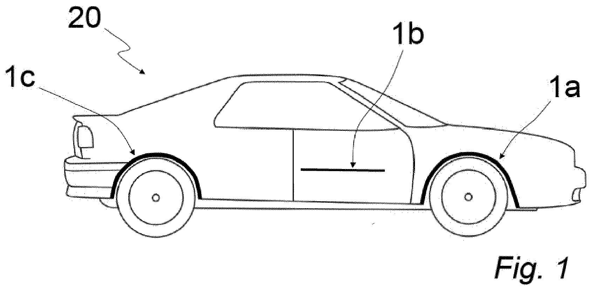

Die Fig. 1 zeigt die Position von erfindungsgemäßen Verkleidungsteilen 1a, 1b, 1c an einem Kraftfahrzeug 20. Die Verkleidungsteilen 1a und 1c sind als Radlaufblende und das Verkleidungsteil 1b als Türschutzleiste ausgebildet. Alternativ können die Verkleidungsteile 1a, 1b, 1c auch eine Steinschlagschutzleiste oder eine Schwellerverkleidung oder ein Luftleitelement, insbesondere ein Spoiler (Dachkantenspoiler, Heckspoiler, Seitenspoiler, Frontspoiler), sein.

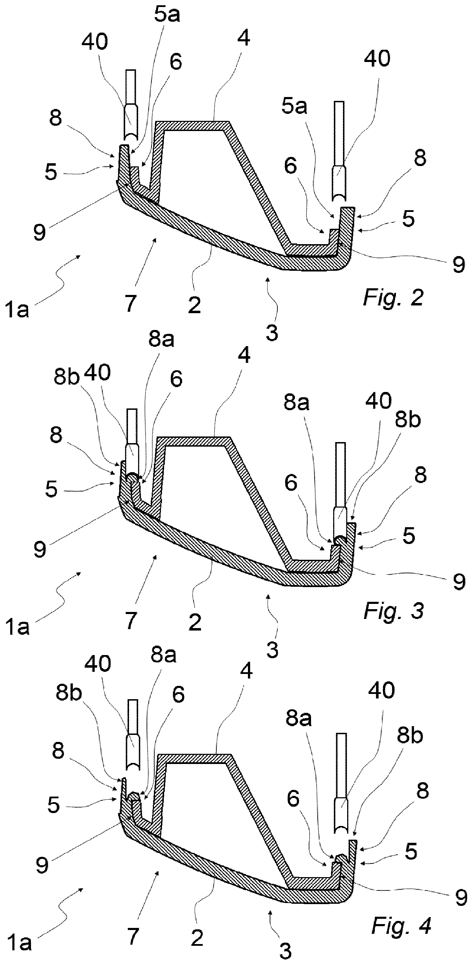

In den Figuren 2 bis 4 ist das erfindungsgemäße Verfahren zur Herstellung eines Verkleidungsteils 1a für ein Kraftfahrzeug dargestellt, umfassend die folgenden Schritte:
- Bereitstellen eines langgestreckten, schalenförmigen Dekorelements 2 aus einem ersten thermoplastischen Kunststoffmaterial, das zumindest einen Verbindungsabschnitt 3 mit einer U-förmigen Querschnittsgeometrie aufweist (vgl. Fig. 2) und
- Bereitstellen eines das Dekorelement 2 zumindest im Bereich des Verbindungsabschnitts 3 verstärkten Trägerelements 4 aus einem zweiten thermoplastischen Kunststoffmaterial (vgl. Fig. 2) und
- Anordnen des Trägerelementes 4 innerhalb des Verbindungsabschnitts 3 des schalenartigen Dekorelements 2, sodass das Trägerelement 2 von diesem umgriffen wird, wobei das Dekorelement 2 randseitig mindestens einen Flanschabschnitt 5 und einen an dem Flanschabschnitt 5 angrenzten Mittelabschnitt 7 aufweist (vgl. Fig. 2) und
- Anlegen eines Abschnittes 6 des Trägerelements 4 in einem gemeinsamen Anlagebereich 9 an die Innenseite 5a des Flanschabschnittes 5 des Dekorelementes 2 (vgl. Fig. 2).

Erfindungsgemäß ragt ein Teilstück 8 des Flanschabschnitts 5 des Dekorelements 2 zumindest abschnittsweise über den Abschnitt 6 des Trägerelements 4 hinaus (vgl. Fig. 2 bis 4).

In dem hier gezeigten Ausführungsbeispiel wird ein Segment 8a des Teilstücks 8 so umgeformt, dass das Dekorelement 2 mittels des Segmentes 8a des Teilstücks 8 formschlüssig mit dem Abschnitt 6 des Trägerelements 4 verbunden wird (vgl. Fig. 3). Wie in Fig. 3 ersichtlich, wird das Teilstück 8 oder das Segment 8a des Teilstücks 8 mittels einer mit Ultraschall angeregten Sonotrode 40 umgeformt.

Das Bereitstellen des Dekorelements 2 und / oder das Bereitstellen des Trägerelements 4 umfasst den Schritt des Kunststoff-Spritzgießens des Dekorelements 2 und / oder des Trägerelements 4.

Die Fig. 4 zeigt das fertige hergestellte Verkleidungsteil 1a für ein Kraftfahrzeug 20 umfassend:
- ein langgestrecktes, schalenförmiges Dekorelement 2 aus einem ersten thermoplastischen Kunststoffmaterial, das zumindest einen Verbindungsabschnitt 3 mit einer U-förmigen Querschnittsgeometrie aufweist und
- ein das Dekorelement 2 zumindest im Bereich des Verbindungsabschnitts 3 verstärkendes Trägerelement 4 aus einem zweiten thermoplastischen Kunststoffmaterial, wobei das Trägerelement 4 innerhalb des Verbindungsabschnitts 3 des schalenartigen Dekorelements 2 angeordnet und von diesem umgriffen ist.

Das Dekorelement 2 weist randseitig mindestens einen Flanschabschnitt 5 und einen an den Flanschabschnitt 5 angrenzenden Mittelabschnitt 7 auf. Ein Abschnitt 6 des Trägerelements 4 liegt in einem gemeinsamen Anlagebereich 9 an der Innenseite 5a des Flanschabschnitts 5 des Dekorelements 2 an. Ein Teilstück 8 des Flanschabschnitts 5 des Dekorelements 2 ragt zumindest abschnittsweise über den Abschnitt 6 des Trägerelements 4 hinaus. Ein Segment 8a des Teilstücks 8 ist so umgeformt, dass das Dekorelement 2 mittels des Segments 8a des Teilstücks 8 formschlüssig mit dem Abschnitt 6 des Trägerelements 4 verbunden ist. Der Abschnitt 6 ist ebenfalls als ein Flanschabschnitt 6 ausgebildet. Das Segment 8a ist durch einen dem Trägerelement 4 zugewandten innenliegenden Bereich 8a der Wandung des Teilstücks 8 gebildet, so dass ein außenliegender Bereich 8b der Wandung des Teilstücks 8 unverformt bleibt. Das Dekorelement 2 und das Trägerelement 4 sind jeweils einstückig ausgebildet. Der Flanschabschnitt 5 des Dekorelementes 2 ist in einem Winkel von der Sichtseite des Dekorelementes 2 weg orientiert. Der außenliegenden Bereich 8b bildet einen Teil dieser Sichtseite. Der Flanschabschnitt 5 weist einen winkligen Übergang zu dem Mittelabschnitt 7 auf.

Das erste thermoplastische Kunststoffmaterial ist ungleichartig zu dem zweiten thermoplastischen Kunststoffmaterial. Das Trägerelement 4 weist ein hier nicht näher dargestelltes Verbindungsmittel zum Verbinden mit der Karosserie des Kraftfahreuges 20 oder mit weiteren Anbauteilen des Kraftfahrzeuges 20 auf. Das hier gezeigte Verkleidungsteil 1a kann eine Radlaufblende oder eine Türschutzleiste oder ein Steinschlagschutzleiste sein. Das Trägerelement 4 und das Dekorelement 2 weisen auf beiden Rändern, also beidseitig, einen erfindungsgemäß hergestellten formschlüssigen Verbund zueinander auf.

Der Kontaktbereich der Sonotrode 40 zu dem Teilstück 8 oder dem Segment 8a des Teilstücks 8a kann rechteckig, oval oder kreisrund sein, oder eine Mischform der vorgenannten Formen aufweisen. Der Kontaktbereich weist in einem Querschnitt eine U-förmige Geometrie auf. Die Sonotrode 20 weist im Kontaktbereich zwei Schneidkanten auf.

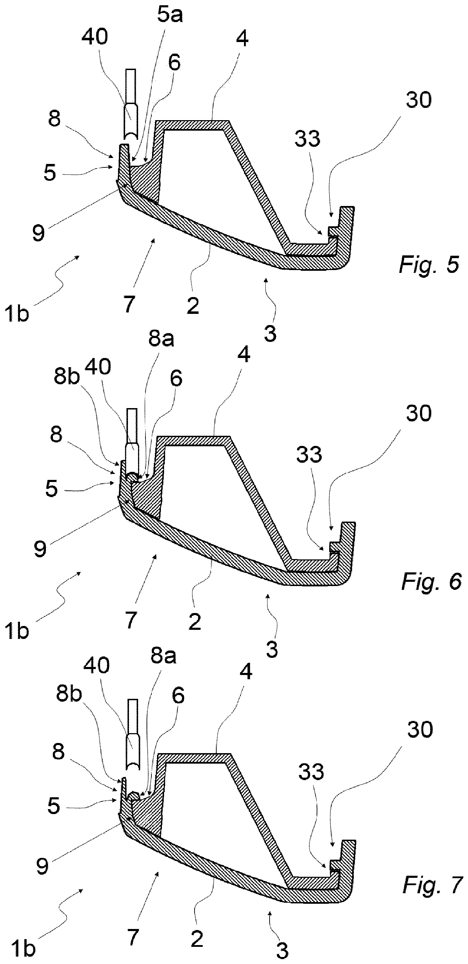

Im Gegensatz zu dem in den Figuren 2 bis 4 dargestellten Ausführungsbeispiel ist in dem Ausführungsbeispiel gemäß den Figuren 5 bis 7 das Trägerelement 4 auf der dem Abschnitt 6 gegenüberliegenden Randseite 30 über einen weiteren Formschluss 33 mit dem Dekorelement 2 verbunden. Die den weiteren Formschluss 33 bildenden Elemente sind bereits bei der Bereitstellung oder bei der Herstellung von Trägerelement 4 und Dekorelement 2 vorgesehen, und beim Anordnen des Trägerelementes 4 innerhalb des Verbindungsabschnittes 3 des Dekorelementes 2 wird der weitere Formschluss 33 hergestellt. Darüber hinaus ist der Abschnitt 6 des Trägerelements 4 nicht als Flansch sondern als Versteifungsrippe ausgebildet. Ansonsten entspricht das Herstellungsverfahren und das Verkleidungsteil dem vorstehend beschriebenen Ausführungsbeispiel.

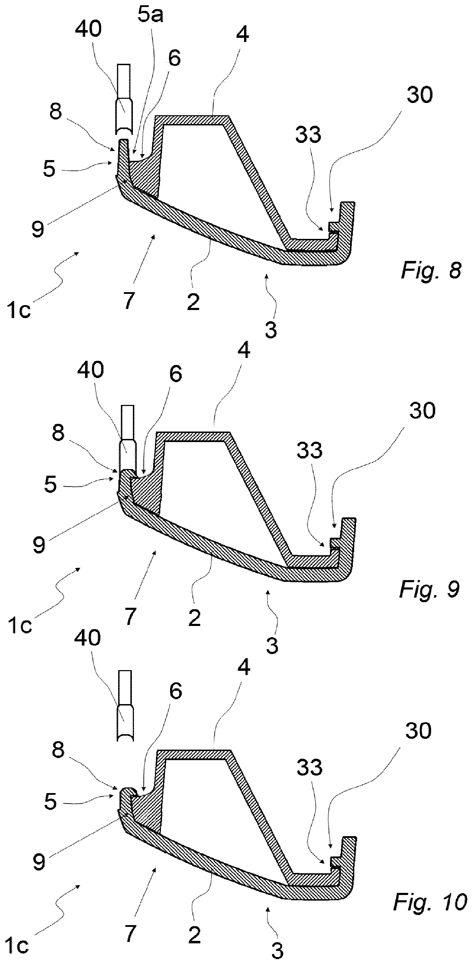

Das Verfahren zur Herstellung eines Verkleidungsteils 1c sowie ein Verkleidungsteil 1c gemäß den Figuren 8 bis 10 unterscheidet sich von dem Verfahren zur Herstellung eines Verkleidungsteils 1b und dem Verkleidungsteil 1b gemäß den Figuren 5 bis 7 dadurch, dass das gesamte Teilstück 8 so umgeformt ist, dass das Dekorelement 2 mittels des Teilstücks 8 formschlüssig mit dem Abschnitt 6 des Trägerelements 4 verbunden ist.

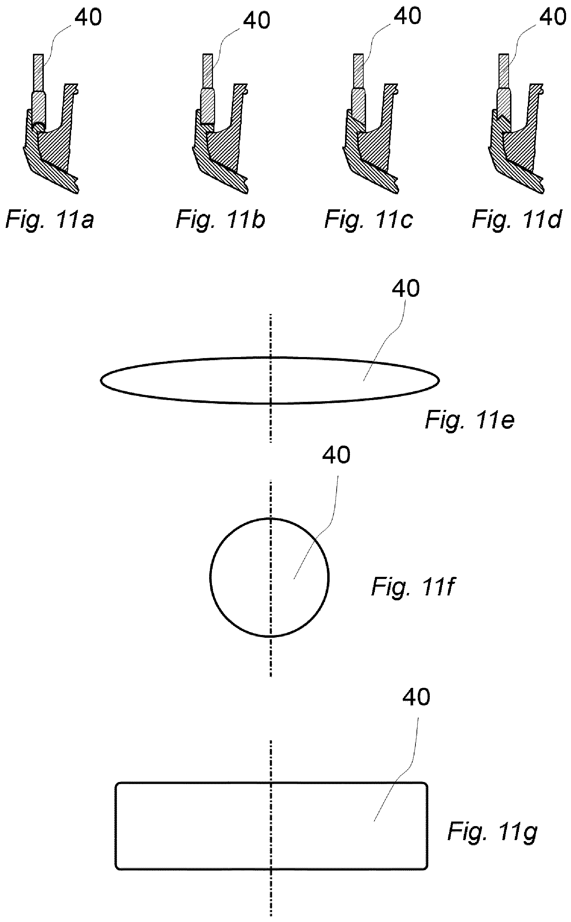

Die Fig. 11a bis Fig. 11d zeigen Seitenansichten bzw. Querschnittsansichten der in dem erfindungsgemäßen Verfahren verwendbaren Sonotroden 40 mittels der das Teilstück 8 oder das Segment 8a des Teilstücks 8 mittels der mit Ultraschall angeregten Sonotrode 40 umgeformt werden kann. Die Fig. 11a zeigt die bereits in den vorstehenden Figuren gezeigte Sonotrode 40 mit dem Kontaktbereich zu dem Teilstück 8 oder dem Segment 8a des Teilstücks 8 der in einem Querschnitt eine U-förmige Geometrie aufweist. Die Fig. 11b zeigt als mögliche Varianten eine im Querschnitt rechteckige, die Fig. 11c eine im Querschnitt dreieckige und die Fig. 11d eine im Querschnitt V-förmige Geometrie des Kontaktbereichs. Die jeweiligen Randbereiche können hierbei Schneidkanten aufweisen. In den Figuren 11e bis 11g sind in Untenansichten mögliche Ausgestaltungen des Kontaktbereichs der Sonotroden 40 zu dem Teilstück 8 oder dem Segment 8a des Teilstücks 8 dargestellt. Der Kontaktbereich kann oval (vgl. Fig. 11e), kreisrund (vgl. Fig. 11f) oder rechteckig (vgl. Fig. 11g) sein oder alternativ eine Mischform der vorgenannten Formen aufweisen. Wie in Fig. 11a und Fig. 11d ersichtlich, weist der Kontaktbereich in einem Querschnitt eine U-förmige bzw. V-förmige Geometrie auf. Die beiden Schenkel der U-förmigen bzw. V-förmigen Geometrie wirken hierbei als Form- und Schneidkante.

## Patentansprüche

1. Verkleidungsteil (1a, 1b, 1c) für ein Kraftfahrzeug (20) umfassend:
- ein langgestrecktes, schalenförmiges Dekorelement (2) aus einem ersten thermoplastischen Kunststoffmaterial, das zumindest einen Verbindungsabschnitt (3) mit einer U-förmigen oder V-förmigen oder L-förmigen Querschnittsgeometrie aufweist und
- ein das Dekorelement (2) zumindest im Bereich des Verbindungsabschnittes (3) verstärkendes Trägerelement (4) aus einem zweiten thermoplastischen Kunststoffmaterial,
wobei das Trägerelement (4) innerhalb des Verbindungsabschnittes (3) des schalenartigen Dekorelements (2) angeordnet und von diesem umgriffen ist, und
wobei das Dekorelement (2) randseitig mindestens einen Flanschabschnitt (5) und einen an den Flanschabschnitt (5) angrenzenden Mittelabschnitt (7) aufweist, und
wobei ein Abschnitts (6) des Trägerelementes (4) in einem gemeinsamen Anlagebereich (9) an der Innenseite (5a) des Flanschabschnittes (5) des Dekorelementes (2) anliegt,
wobei ein Teilstück (8) des Flanschabschnitts (5) des Dekorelementes (2) zumindest abschnittsweise über den Abschnitt (6) des Trägerelementes (4) hinausragt und, wobei das Teilstück (8) oder ein Segment (8a) des Teilstücks (8) so umgeformt ist, dass das Dekorelement (2) mittels des Teilstücks (8) oder des Segments (8a) des Teilstücks (8) formschlüssig mit dem Abschnitt (6) des Trägerelementes (4) verbunden ist,
**dadurch gekennzeichnet, dass**
das Segment (8a) durch einen dem Trägerelement (4) zugewandten innenliegenden Bereich (8a) der Wandung des Teilstücks (8) gebildet ist, so dass ein außenliegender Bereich (8b) der Wandung des Teilstückes (8) unverformt bleibt und, wobei das erste thermoplastische Kunststoffmaterial ungleichartig zu dem zweiten thermoplastischen Kunststoffmaterial ist.

2. Verkleidungsteil (1a, 1b, 1c) nach Anspruch 1, **dadurch gekennzeichnet, dass** der Abschnitt (6) ein Flanschabschnitt ist.

3. Verkleidungsteil (1a, 1b, 1c) nach einem der vorstehenden Ansprüche, **dadurch gekennzeichnet, dass** das Dekorelement (2) und das Trägerelement (4) jeweils einstückig ausgebildet sind.

4. Verkleidungsteil (1a, 1b, 1c) nach einem der vorstehenden Ansprüche, **dadurch gekennzeichnet, dass** das Trägerelement (4) Verbindungsmittel zum Verbinden mit der Karosserie (21) oder mit weiteren Anbauteilen eines Kraftfahrzeuges aufweist.

5. Verkleidungsteil (1a, 1b, 1c) nach einem der vorstehenden Ansprüche, **dadurch gekennzeichnet, dass** das Verkleidungsteil (1a, 1b, 1c) eine Radlaufblende oder Türschutzleiste oder eine Steinschlagschutzleiste oder eine Schwellerverkleidung oder ein Luftleitelement ist.

6. Verkleidungsteil (1a, 1b, 1c) nach einem der vorstehenden Ansprüche, **dadurch gekennzeichnet, dass** das Trägerelement (4) auf der dem Abschnitt (6) gegenüberliegenden Randseite (30) über einen weiteren Formschluss (33) mit dem Dekorelement (2) verbunden ist.

7. Verfahren zur Herstellung eines Verkleidungsteiles (1a, 1b, 1c) für ein Kraftfahrzeug, insbesondere eines Verkleidungsteils (1a, 1b, 1c) nach einem der Ansprüche 1 bis 6, umfassend die folgenden Schritte:
- Bereitstellen eines langgestreckten, schalenförmigen Dekorelements (2) aus einem ersten thermoplastischen Kunststoffmaterial, das zumindest einen Verbindungsabschnitt (3) mit einer U-förmigen oder V-förmigen oder L-förmigen Querschnittsgeometrie aufweist und
- Bereitstellen eines das Dekorelement (2) zumindest im Bereich des Verbindungsabschnittes (3) verstärkenden Trägerelements (4) aus einem zweiten thermoplastischen Kunststoffmaterial, und
- Anordnen des Trägerelements (4) innerhalb des Verbindungsabschnittes (3) des schalenartigen Dekorelements (2), so dass das Trägerelement (2) von diesem umgriffen wird, wobei das Dekorelement (2) randseitig mindestens einen Flanschabschnitt (5) und einen an den Flanschabschnitt (5) angrenzenden Mittelabschnitt (7) aufweist, und
- Anlegen eines Abschnitts (6) des Trägerelementes (4) in einem gemeinsamen Anlagebereich (9) an die Innenseite (5a) des Flanschabschnittes (5) des Dekorelementes (2),wobei ein Teilstück (8) des Flanschabschnitts (5) des Dekorelementes (2) zumindest abschnittsweise über den Abschnitt (6) des Trägerelementes (4) hinausragt und, wobei das Teilstück (8) oder ein Segment (8a) des Teilstücks (8) so umgeformt wird, dass das Dekorelement (2) mittels des Teilstücks (8) oder des Segments (8a) des Teilstücks (8) formschlüssig mit dem Abschnitt (6) des Trägerelementes (4) verbunden wird,
**dadurch gekennzeichnet, dass**
das Segment (8a) durch einen dem Trägerelement (4) zugewandten innenliegenden Bereich (8a) der Wandung des Teilstücks (8) gebildet ist, so dass ein außenliegender Bereich (8b) der Wandung des Teilstückes (8) unverformt bleibt und, das erste thermoplastische Kunststoffmaterial ungleichartig zu dem zweiten thermoplastischen Kunststoffmaterial ist.

8. Verfahren zur Herstellung eines Verkleidungsteils (1a, 1b, 1c) nach Anspruch 7, **dadurch gekennzeichnet, dass** das Bereitstellen des Dekorelementes (2) und/oder das Bereitstellen des Trägerelementes (4) den Schritt des Kunststoff-Spritzgießens des Dekorelementes (2) und/oder des Trägerelementes (4) umfasst.

9. Verfahren zur Herstellung eines Verkleidungsteils (1a, 1b, 1c) nach Anspruch 7 oder 8, **dadurch gekennzeichnet, dass** das Teilstück (8) oder das Segment (8a) des Teilstücks (8) mittels einer mit Ultraschall angeregten Sonotrode (40) umgeformt wird.

## Claims

1. Trim panel (1a, 1b, 1c) for a motor vehicle (20), including:
- an elongated, shell-like decorative element (2) of a first thermoplastic synthetic material, which comprises at least one connecting section (3) with a U-shaped or V-shaped or L-shaped cross-sectional geometry, and
- a support element (4) of a second thermoplastic synthetic material, reinforcing the decorative element (2) at least in the region of the connection section (3),
wherein the support element (4) is arranged within the connecting section (3) of the shell-like decorative element (2) and is encompassed by the same, and
wherein the decorative element (2), at the edge side, comprises at least one flange section (5) and a middle section (7) adjacent to the flange section (5), and
wherein a section (6) of the support element (4) rests against the interior side (5a) of the flange section (5) of the decorative element (2) in a common contact area (9),
wherein a portion (8) of the flange section (5) of the decorative element (2) projects, at least in sections, beyond the section (6) of the support element (4), and wherein the portion (8), or a segment (8a) of the portion (8) is deformed such that the decorative element (2) is form-fittingly connected with the section (6) of the support element (4) by means of the portion (8) or the segment (8a) of the portion (8),
**characterized in that**
the segment (8a) is formed by an internal region (8a) of the wall of the portion (8) facing the support element (4), so that an external region (8b) of the wall of the portion (8) remains undeformed, and wherein the first thermoplastic synthetic material is dissimilar to the second thermoplastic synthetic material.

2. Trim panel (1a, 1b, 1c) according to claim 1, **characterized in that** the section (6) is a flange section.

3. Trim panel (1a, 1b, 1c) according to one of the preceding claims, **characterized in that** the decorative element (2) and the support element (4) are respectively integrally formed.

4. Trim panel (1a, 1b, 1c) according to one of the preceding claims, **characterized in that** the support element (4) comprises connecting means for connecting to the vehicle body (21) or to further add-on parts of a motor vehicle.

5. Trim panel (1a, 1b, 1c) according to one of the preceding claims, **characterized in that** the trim panel (1a, 1b, 1c) is a wheel housing panel or a door protective strip or a rock protective strip or a sill trim or an air conducting element.

6. Trim panel (1a, 1b, 1c) according to one of the preceding claims, **characterized in that** the support element (4), on the edge side (30) opposite the section (6), is connected with the decorative element (2) via a further form fit (33).

7. Method for producing a trim panel (1a, 1b, 1c) for a motor vehicle, in particular a trim panel (1a, 1b, 1c) according to one of claims 1 to 6, including the following steps:
- providing an elongated, shell-like decorative element (2) of a first thermoplastic synthetic material, which comprises at least one connecting section (3) with a U-shaped or V-shaped or L-shaped cross-sectional geometry, and
- providing a support element (4) of a second thermoplastic synthetic material, reinforcing the decorative element (2) at least in the region of the connection section (3), and
- arranging of the support element (4) within the connecting section (3) of the shell-like decorative element (2), so that the support element (2) is encompassed by the same, wherein the decorative element (2), at the edge side, comprises at least one flange section (5) and a middle section (7) adjacent to the flange section (5), and
- Placement a section (6) of the support element (4) in a common contact area (9) on the interior side (5a) of the flange section (5) of the decorative element (2), wherein a portion (8) of the flange section (5) of the decorative element (2) projects, at least in sections, beyond the section (6) of the support element (4), and wherein the portion (8), or a segment (8a) of the portion (8) is deformed such that the decorative element (2) is form-fittingly connected with the section (6) of the support element (4) by means of the portion (8) or the segment (8a) of the portion (8),
**characterized in that**
the segment (8a) is formed by an internal region (8a) of the wall of the portion (8) facing the support element (4), so that an external region (8b) of the wall of the portion (8) remains undeformed, and the first thermoplastic synthetic material is dissimilar to the second thermoplastic synthetic material.

8. Method for producing a trim panel (1a, 1b, 1c) according to claim 7, **characterized in that** the provision of the decorative element (2) and/or the provision of the support element (4) includes the step of the plastic injection-molding of the decorative element (2) and/or of the support element (4).

9. Method for producing a trim panel (1a, 1b, 1c) according to claim 7 or 8, **characterized in that** the portion (8), or the segment (8a) of the portion (8), is deformed by means of a sonotrode (40) excited by ultrasound.

## Revendications

1. Élément d'habillage (1a, 1b, 1c) pour un véhicule automobile (20) comprenant :
- un élément de décoration (2) allongé et en forme de coque, fabriqué dans une première matière synthétique thermoplastique, qui comporte au moins une partie faisant liaison (3) avec une géométrie de section transversale en forme de U, V ou L et
- un élément de support (4), fabriqué dans une deuxième matière synthétique thermoplastique, renforçant l'élément de décoration (2) au moins dans la zone de la partie faisant liaison (3),
l'élément de support (4) étant agencé à l'intérieur de la partie faisant liaison (3) de l'élément de décoration (2) en forme de coque qui l'entoure ainsi, et
l'élément de décoration (2) comportant sur le bord au moins une section de flanc (5) et une section centrale (7) adjacente à la section de flanc (5), et
une section (6) de l'élément de support (4) étant en repose contre une zone d'appui (9) commune sur la face intérieure (5a) de la section de flanc (5) de l'élément de décoration (2),
une partie (8) de la section de flanc (5) de l'élément de décoration (2) dépassant, du moins par endroits, de la section (6) de l'élément de support (4) et la partie (8) ou un segment (8a) de la partie (8) étant refaçonné de telle sorte que l'élément de décoration (2) est assemblé par engagement positif au moyen de la partie (8) ou du segment (8a) de la partie (8) avec la section (6) de l'élément de support (4),
**caractérisé en ce que**
le segment (8a) est constitué par une zone (8a) intérieure de la paroi de la partie (8) tournée vers l'élément de support (4) de telle sorte qu'une zone extérieure (8b) de la paroi de la partie (8) reste non-déformée, la première matière synthétique thermoplastique n'étant pas identique à la deuxième matière synthétique thermoplastique.

2. Élément d'habillage (1a, 1b, 1c) selon la revendication 1, **caractérisé en ce que** la section (6) est une section de flanc.

3. Élément d'habillage (1a, 1b, 1c) selon l'une des revendications précédentes, **caractérisé en ce que** l'élément de décoration (2) et l'élément de support (4) sont chacun formés d'un seul tenant.

4. Élément d'habillage (1a, 1b, 1c) selon l'une des revendications précédentes, **caractérisé en ce que** l'élément de support (4) comporte des moyens de liaison avec la carrosserie (21) ou avec d'autres pièces rapportées d'un véhicule automobile.

5. Élément d'habillage (1a, 1b, 1c) selon l'une des revendications précédentes, **caractérisé en ce que** l'élément d'habillage (1a, 1b, 1c) est un enjoliveur de passage de roue, une bande protectrice de porte, une barre pare-pierres ou un revêtement de bas de marche ou encore un élément de guidage d'air.

6. Élément d'habillage (1a, 1b, 1c) selon l'une des revendications précédentes, **caractérisé en ce que** l'élément de support (4) est relié sur le côté marginal (30) opposé à la section (6) par un engagement positif (33) supplémentaire avec l'élément de décoration (2).

7. Procédé de fabrication d'un élément d'habillage (1a, 1b, 1c) pour un véhicule automobile, en particulier d'un élément d'habillage (1a, 1b, 1c) selon l'une des revendications 1 à 6, comprenant les étapes suivants :
- fournir un élément de décoration (2) allongé et en forme de coque, fabriqué dans une première matière synthétique thermoplastique, qui comporte au moins une partie faisant liaison (3) avec une géométrie de section transversale en forme de U, V ou L et
- fournir d'un élément de support (4), fabriqué dans une deuxième matière synthétique thermoplastique, renforçant l'élément de décoration (2) au moins dans la zone de la partie faisant liaison (3), et
- mise en place de l'élément de support (4) à l'intérieur de la partie faisant liaison (3) de l'élément de décoration (2) en forme de coque, de telle sorte que l'élément de support (4) est entouré par cet élément de décoration, ledit élément de décoration (2) comportant sur le bord au moins une section de flanc (5) et une section centrale (7) adjacente à la section de flanc (5), et
- pose d'une section (6) de l'élément de support (4) dans une zone d'appui (9) commune sur le côté intérieure (5a) de la section de flanc (5) de l'élément de décoration (2), une partie (8) de la section de flanc (5) de l'élément de décoration (2) dépassant, du moins par endroits, de la section (6) de l'élément de support (4) et la partie (8) ou un segment (8a) de la partie (8) étant modelé de telle sorte que l'élément de décoration (2) est relié au moyen de la partie (8) ou du segment (8a) de la partie (8) par engagement positif avec la section (6) de l'élément de support (4),
**caractérisé en ce que**
le segment (8a) est constitué par une zone intérieure (8a) tournée vers l'élément de support (4) de la paroi de la partie (8) de telle sorte qu'une zone extérieure (8b) de la paroi de la partie (8) reste non-déformée et la première matière synthétique thermoplastique n'est pas identique à la deuxième matière synthétique thermoplastique.

8. Procédé de fabrication d'un élément d'habillage (1a, 1b, 1c) selon la revendication 7, **caractérisé en ce que** la fourniture de l'élément de décoration (2) et/ou la fourniture de l'élément de support (4) comprend l'étape de moulage du plastique par injection de l'élément de décoration (2) et/ou de l'élément de support (4).

9. Procédé de fabrication d'un élément d'habillage (1a, 1b, 1c) selon la revendication 7 ou 8, **caractérisé en ce que** la partie (8) ou le segment (8a) de la partie (8) est refaçonné(e) au moyen d'une sonotrode (40) excitée par ultrasons.
